# EUROPEAN PATENT SPECIFICATION

(11) **EP 1 799 761 B1**
(45) Date of publication and mention of the grant of the patent: **10.09.2008**
(21) Application number: 05803888.6
(22) Date of filing: 13.10.2005
(51) Int. Cl.: C08L 1/00, C08L 23/02, C08K 5/01

(54) **COMPOSITE COMPOSITIONS, STRUCTURAL ARTICLES AND PRODUCTION THEREOF**
ZUSAMMENGESETZTE ZUSAMMENSETZUNGEN, STRUKTURELLE ARTIKEL UND IHRE HERSTELLUNG
COMPOSITIONS COMPOSITES, ARTICLES STRUCTURELS ET PRODUCTION DE CEUX-CI

(30) Priority: 14.10.2004 US 964989
(43) Date of publication of application: 27.06.2007
(73) Proprietor: Honeywell International Inc., Morristown, New Jersey 07960 (US)
(72) Inventor: CLARKE, Vincent, M., Morris Plains, NJ 07950 (US); HACKER, Scott, Martin, River Edge, NJ 07661 (US); SEVEN, Manfred, K., Long Valley, NJ 07853 (US); GARFT, James, E., Yardley, PA 19067 (US)
(74) Representative: Hucker, Charlotte Jane
(86) International application number: PCT/US2005/036549
(87) International publication number: WO 2006/044400

(56) References cited:
- WO-A-02/059196
- WO-A-02/083824
- WO-A-02/093157
- US-A- 5 187 202
- US-A1- 2003 228 454
- BORSIG E ET AL: "SOLID-STATE POLYPROPYLENE GRAFTING AS AN EFFECTIVE CHEMICAL METHOD OF MODIFICATION" MACROMOLECULAR SYMPOSIA, WILEY VCH VERLAG, WEINHEIM, DE, no. 176, November 2001 (2001-11), pages 289-298, XP001117125 ISSN: 1022-1360

## Description

### FIELD OF THE INVENTION

The present invention relates to composite compositions comprising thermoplastic polymer, cellulosic fibers, coupling agent and lubricants, to lubricant/coupling agents packages for such composite compositions, and to structural members and methods for producing structures formed from such compositions. The composites of the present invention are well-suited for use as wood substitutes when formed into structural members.

### BACKGROUND TO THE INVENTION

Composite materials which comprise an organic resin and a filler have been known and used for a number of years. In order to reduce the need to harvest natural wood, there has been a need to find materials that exhibit the look and feel of natural wood. One reason for this need relates to efforts to conserve the limited supply of natural wood for construction purposes from The world's forest. Another reason is that certain composite materials can exhibit properties that are superior to natural wood in certain respects. For example, it is possible to formulate composite materials into synthetic wood that has enhanced moisture resistance and improved physical properties.

In addition to the general cost and difficulty associated with wholesale use of wood products in construction, much of the wood in general board fabrication is wasted material. A substantial amount of sawdust is created together with pulp materials such as branches as the lumber producers endeavor to transform a harvested tree into a collection of elongated boards and planks for use in fabrication of structures. Attempts have thus been made to manufacture produces as substitutes for virgin wood utilizing wood fiber or particles together with various binder materials. Such products have become available and are generally known as "fiber board" or "particle board." In addition, the use of wood particles or fibers together with plastic binders have created so-called plastic wood. As a result, cellulose and related materials are highly desirable material for use in composites in general, and in composites intended for use as wood substitutes in particular.

One problem associated with manufacture and effectiveness of such composite materials is the ability to strongly bind the cellulosic fibers and the thermoplastic binder. Adhesion stability between the filler and the resinous mixture has been recognized as a source of degradation and failure of these materials for nearly as long as such materials have been known. As reported in U.S. Patent No. 5,981,067, one solution to this problem involves enhancing polymer-flber compatibility, that is the tendency of the polymer and fiber to mix and/or adhere to one another. U.S. Pat. No. 5.120.776 teaches cellulosic fibers pretreated with maleic or phthalic anhydride to improve the bonding and dispersibility of the fiber In the polymer matrix Also of relevance in this regard is Maldas and Kokta, "Surface modification of wood fibers using maleic anhydride and isocyanate as coating components and their performance in polystyrene composites", Journal Adhesion Science Technology, 1991, pp. 1-14.

While maleic anhydride-based coupling agents have been suggested for use In making composite materials, there has been a decided absence of success In the use of such materials in commercial applications. Commercial applications of composite compositions frequently involves the shaping of such compositions by molding, extrusion. In order for such operations to be practically effective In a commercially competitive environment, it is necessary that such processes be carried out at a relative high rate and with a minimum of operational problems. Toward this end, the use of additives In the composite composition to aid in the processing thereof are practically essential. One commonly used processing aid is a lubricant or release agent, which allows the effective processing of such composites at commercially acceptable speeds. Stearates, and generally metal stearates, and in particular calcium stearate or zinc stearate, are frequently used in lubricant packages for composites involving thermoplastic polymers and cellulosic filler. See, for example. U.S. Patent No. 6,180,257 B1 (col., 2. lines 28-28).

However, it has been discovered that the use of stearate lubricants for forming extruded composites of cellulosic-filler and thermoplastic polyolefin binders t hat employ m aleated polypropylene coupling agents can results i n crazing and cracking of the structural articles produced from such maleated polypropylene coupling agent-containing composites, as well as having an adverse effect on extrusion torque and extrusion pressures. In an attempt to address this problem It has been no for the processor or producer of the articles to slow down the extrusion rate and increase the amount of lubricant employed. Both of these adjustments are undesirable and generally unacceptable. The slower extrusion rate results in decreased production per time period (output rates) and higher final product production costs. The use of increased levels of lubricant increases production cost and can result in towering of the desirable properties of the articles.

Thus, it would be highly desirable if composites of cellulosic filler and thermoplastic polyolefin binders that employ maleated polypropylene coupling ages could be provided that did not produce such crazing and cracking of structural articles formed therefrom, and that could be accomplished without the necessity for either slowing down the extrusion rate nor increasing the amount of lubricant employed. It would be especially desirable to provide such improved composites which accomplish the aforementioned objective and provide structural article therefrom that are of equal or better physical properties than the structural articles from the prior art composites.
WO-A-02083824 describes composite compositions comprising a thermoplastic polymer, cellulosic fibres, a lubricant and a coupling agent, and structural members formed from such compositions. The coupling agent may be a maleated polyolefin polymer, available for example from the present Applicant, under trade designations A-C1221, 597, 596 and 575.
US-A-20030228454 describes compositions comprising cellulosic fibres, a water-soluble binder, a lubricant and a compatibiliser, and at least one matrix polymer, and composites made from such compositions.
US-A-5187202 describes a composition comprising a thermoplastic substrate, cellulosic fibre and at least one dispersant aid. The compositions may be formed into aesthetically-pleasing granite-like simulated stone structures. The composition may optionally include a coupling agent.
EP-A-1580231 forms part of the state of the art under Article 54(3) EPC, and describes polypropylene-based compositions comprising 8 to 89.8 weight % of propylene homo or copolymer; 10 to 91.8 weight % cellulosic fibres; 0.2 to 10 weight % binding agent based upon a carboxylated polypropylene; and 0.40 weight % of an additive which may be impact strength modifier for the polypropylene, a stabiliser or an antioxidant.

### SUMMARY OF THE INVENTION

The present invention has several aspects, including novel lubricant/coupling agent additive package compositions, novel composite compositions, novel structural members and novel methods of manufacture of the composite structures. Each of these aspects flows, at least in part, from the recognition by the present Inventors that the problem addressed can be solved by the use of solid state produced maleated polypropylene coupling agents as the coupling agent employed in composites of cellulosic fillers, thermoplastic polyolefin binders and stearate lubricants. Previously, only melt-formed maleated polypropylene coupling agents, such as those produced in a melt process such as disclosed in U.S. Patent Nos. 3,882,1945, 4,404,312 and 5,001,197, have been employed In composites of cellulosic fillers, thermoplastic polyolefins and stearate lubricants. The present inventors have discovered that by employing solid state produced maleated polypropylene coupling agent in composites of cellulosic fibers, thermoplastic polyolefins and stearate lubricants, the problem of crazing and cracking In the structural articles formed therefrom can be essentially eliminated and that no decrease in extruder speed nor any increase in lubricant level is required.

Applicants have discovered composites compositions well suited for forming shaped and structural articles, such composite composition comprising thermoplastic polyolefin polymer, cellulose fiber, a solid state maleated polypropylene coupling agent and a stearate lubricant. The solid state maleated polypropylene coupling agent may be combined with the stearate lubricant and optionally other lubricants to form a novel preformed additive package for use in making the composite compositions.

The methods of the present invention comprise forming a composite of the present invention into a shaped or structural article, preferably by extruding the composite of thermoplastic polyolefin polymer, cellulose fiber, a solid state maleated polypropylene coupling agent and a stearate lubricant.

The shaped or structural articles of this invention comprise shaped or structural articles formed from such composites comprising thermoplastic polyolefin polymer, cellulose fiber, a solid state maleated polypropylene coupling agent and a stearate lubricant.

### BRIEF DESCRIPTION OF THE DRAWINGS

Fig. 1 is a cross-sectional, semi-schematic view of one structural member in accordance with one embodiment of the present invention;
Fig. 2 is a cross-selectional, semi-schematic view of one structural member in accordance with another embodiment of the present invention; and.
Fig. 3 is a cross-sectional, semi-schematic view of one structural member in accordance with another embodiment of the present Invention.

### DESCRIPTION OF PREFERRED EMBODIMENTS

The invention is directed to composite compositions which may be fabricated at high rates into shaped or structural artictes, and in particular structural members, exhibiting desirable strength properties. Generally, the composition preferably comprises from 10 to 50 parts by weight of thermoplastic polymer, from 50 to 84 parts by weight of cellulosic fiber, effective amounts of a coupling agent and effective amounts of lubricant in accordance with the present invention. As used herein, the term effective amount refers to any amount which produces a noticeable, and preferably a substantial, improvement in the corresponding performance of the composition. With respect coupling agents, therefore, an effective amount of a solid state maleated polypropylene coupling agent produces a noticeable improvement in the compatibility of and/or adherence between the thermoplastic an the cellulosic fiber, which will typically although not exclusively be manifested in an improvement in the tensile strength of the shaped article. Such effective amount of the maleated polypropylene coupling agent will preferably be an amount of from 1 to 5 parts by weight. With respect to a stearate lubricant, an effective amount produces a noticeable improvement in the processability of the composition, which will typically although not exclusively be manifested in an improvement in the speed and/or efficiency with which the composition can be effectively formed, and preferably extruded, into a shaped article. Such effective amount of stearate lubricant alone or combined with other lubricants will preferably be an amount of from 1 to 10 parts by weight, more preferably an amount of from 1 to 5 parts by weight.

According to certain preferred embodiments, the composite composition preferably comprises from 30 to 47, and even more preferably 20 to 40 parts by weight, and even still more preferably from 25 to 35 parts by weight of thermoplastic polyolefin polymer, preferably from 50 to 80 parts by weight, and even more preferably from 50 to 70 parts by weight, of cellulosic fiber, preferably from 1 to 5 parts by weight and even more preferably 1 to3 parts by weight, of solid state produced maleated polypropylene coupling agent, and preferably from 1 to 8 parts by weight, more preferably from 2 to 6 parts by weight, of lubricant.

Preferred embodiments of the present compositions which include solid state maleated polypropylene-based coupling agents and stearate lubricating agent in accordance with the present invention produce shaped articles with improved performance properties and do so without any significant or substantial crazing or cracking of the article produced and do so without requiring any decrease in production output or any need to increase the level of lubricant employed. The articles produced from the preferred composite compositions of the present invention preferably exhibit a modulus of elasticity (MOE) of preferably at least about 250,000, more preferably at least a bout 300,000, and a modulus of rupture (MOR) preferably of at least about 1500, more preferably at least about 2000.

Another substantial and unexpected advantage of the present invention, and particularly the present solid state maleated polypropylene coupling agent/ stearate lubricant combination, is a cost advantage which derives from the improved processing performance of the present compositions of the invention. More particularly, the present solid state maleated polypropylene coupling agent/ stearate lubricant combination is more effective in enhancing the formability, and particularly the extrudability, of the composite compositions.

It is contemplated that any substantially thermoplastic polyolefin polymer is adaptable for use in accordance with the present invention. The primary requirement for the substantially thermoplastic polyolefin polymeric material is that it retain sufficient thermoplastic properties to permit melt bending with cellulosic fiber and permit effective formation into shaped articles by extrusion or molding in a thermoplastic process. It is thus contemplated that minors amounts of thermosetting resins may be Included in the present compositions without sacrificing these essential properties. Both virgin and recycled (waste) polymers can be used. As used herein, the term polyolefin refers to homopolymers, copolymers a nd modified polymers of unsaturated aliphatic hydrocarbons. Among the preferred polyolefins are C₂-C₄ polyolefins and polyethylene and polypropylene are most preferred. Especially preferred is low density polyethylene (LDPE) and high density polyethylene (HDPE).

The present compositions include filler that comprises cellulosic fiber. The filler component may be comprised of reinforcing (high aspect ratio) filler, non-reinforcing (low aspect ratio) filler, and combinations of both reinforcing and non-reinforcing filler. Aspect ratio is defined as the ratio of the length to the effective diameter of the filler particle. High aspect ratio offers an advantage, Le., higher strength and modulus for the same level of filler content. Inorganic fillers, such as glass fibers, carbon fibers, talc, mica, kaolin, calcium carbonate, may be included as an optional supplement to the cellulose. In addition, other organic fillers, including any suitable polymeric fiber, may also be used.

The cellulose fiber in accordance with the present invention is particularly important and preferred because of its low cost and for other reasons, such as light weight, ability to maintain high aspect ratio after processing in high intensity thermokinetic mixer and low abrasive properties (thus, extending machine life). The cellulose may be derived from any source, including wood/forest and agricultural by-products. The cellulose fiber may include hard wood fiber, soft wood fiber, hemp, Jute, rice hulls, wheat straw, and combinations of two or more of these. In certain embodiments, the cellulose preferably comprises high aspect ratio fiber, such as are present in hard woods, in a substantial proportion. However, such high aspect ration fibers are generally more difficult to process and therefore may be less desirable in embodiments in which processing speed and efficiency are particularly important considerations.

As used herein, the term solid state maleated polypropylene coupling agent refers to a solid state maleated polypropylene coupling agent which tends to promote dispersion and/or compatibilization of the cellulose particles and the thermoplastic polymer. The inventors have surprisingly discovered that a solid state maleated polypropylene coupling agent is highly effective for use in connection with different polyolefin polymers, more preferably C₂ - C₄ polyolefins, and even more preferably polyethylene and polypropylene and stearate lubricants for producing the composite compositions and structural article therefrom. For the embodiments of the present invention in which it is desirable to have a coupling agent which can be used with a high degree of effectiveness in a wide variety of composite compositions, Inventors have discovered that is preferred to utilize a maleated polypropylene polymer, and particular polypropylene having a molecular weight preferably of from 10,000 to 25,000 and even more preferably from 10,000 to 20,000 and 0.6 to 5% maleic anhydride functionalities, even more preferably from 1.0 to 2.% maleic anhydride functionalities, and still more preferably 1.3 to 1.6% maleic anhydride functionalities on average, per polymer chain. Such solid state maleated polypropylene is available, for example, from Kometra Kunststoff Modificakatoren und Aditiv AG of Schkopau, Germany. Such solid state maleated polypropylene is produced according to the solid state manufacturing methods disclosed in WO 02/093157. As examples of such typical soled state maleated polypropylenes available f rom Kometra Kunststoff Modificakatoren und Aditiv AG include, are those available under the product designations Kometra 2110FA, Kometra 2112FA, Kometra 8012FA and Kometra 8112FA solid state maleated polypropylenes. An especially preferred solid state maleated polypropylene useful as a coupling agent in the polyolefin thermoplastic polymer/cellulose filler/ stearate lubricant composite compositions of this invention is Kometra 8112

It is contemplated that in certain embodiments it may be desirable to additionally preferably employ silane coupling agent(s) alone or In combination with other preferred coupling a gents in addition to the solid state maleated polypropylene coupling agents. Of course other effective coupling compounds not specifically mentioned herein, but which are now known or become known to those skilled In the art, may also be used In addition to the solid state maleated polypropylene coupling agents described herein.

The present composite compositions include an effective amount of a stearate lubricant or a lubricant package containing such a lubricant. Although any suitable stearate lubricant may be employed in the composite compositions of this invention, in one preferred embodiment, the lubricant comprises calcium stearate or zinc stearate lubricant The lubricant packages in accordance with the present invention also preferably include carboxyamide wax, and even more preferably stearamide wax, as disclosed in U.S. Patent No. 3,578,621. Especially preferred is ethylenebis stearamide ("EBS"). Although it is contemplated that the stearate and the amide wax may be used together over a wide range of relative concentrations in the lubricant package, it is preferred that the weight ratio alkyl ester to amide wax is from 30:1 to 1:1, with 20:1 to 2:1 being more preferred.

One aspect of the present invention involves additive compositions useful in connection with the formation of composite compositions having advantageous processing and end-use properties. More particularly, the additive packages comprise a unique combination of stearate lubricating agents and solid state maleated polypropylene coupling agents which are effective at improving the processing characteristics of the composite without detracting from the strength characteristics of the finished product while not reducing composite article production output and without producing such articles with unacceptable crazing and cracking.

Although it is contemplated that the stearate lubricating packages of the present invention can beneficially be used alone in certain embodiments, it is generally preferred to provide an additive package which includes a stearate lubricant agent/package in combination with a solid state maleated polypropylene coupling agent/package in accordance with the present invention. Furthermore, while it is contemplated that these packages can be combined in a wide range of relative proportions in accordance with the present invention, it is generally preferred to provide an additive package having a stearate-containing lubricant:coupling agent weight ratio of from 1:1 to 4:1, and even more preferably in certain embodiments of 3:2 or 3:1 or 2:1.

The composite compositions of this invention may contain other optional components, including but not limited to, other fillers such as mineral fillers in an amount of from 0 to 10 wt%, pigments and coloring agents in an amount of from 0 to 4 wt%, light stabilizers in an amount of from 0 to 2 wt%, biocides in an amount of from 0 to 2 wt%, wherein the weight percents are based on the total weight of the composition.

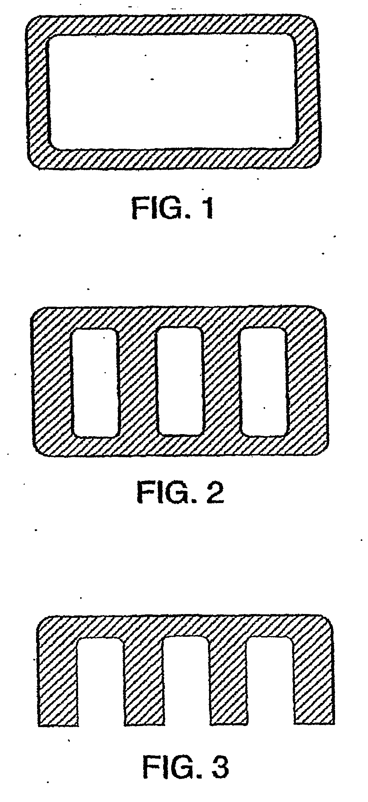

As indicated previously, the composite compositions of the present invention can be used to from a wide variety of structural members, and all such structural members are within the broad scope of the present invention. Inventors have found, however, that the present methods and compositions can be utilized to form structural members, and particularly extruded structural members, that would otherwise be exceptionally difficult to form and/or practically unfeasible from an economic stand point because of high processing costs. More specifically with respect to Figs 1 - 3, it can be seen that the present invention includes structural members that are at once both strong and lightweight. It will be appreciated by those skilled in the art that such lightweight structural members would not have been practically possible to manufacture by extrusion from prior composite compositions because of the high cross-sectional area of the structures. More particularly, the present composite compositions have a unique combination of high-strength and high lubricity that permit the extrusion of such high surface area configurations under relatively higher rate, economical extrusion conditions. Inventors believe that such structural members could not have been produced in such a commercially efficient and cost-effective manner in accordance with prior art techniques employing composites of cellulosic fillers, thermoplastic polyolefin, melt-formed maleated polypropylene coupling agents and stearate lubricants.

The methods of forming composite article involve forming a shaped article comprising the steps providing a composite composition in accordance with the invention as described herein and forming said composition into the desired shaped article. The composition can be provided by combing the components in accordance with any of the techniques well known in the art for combing components to form homogeneous composite compositions, as disclosed In U.S. Patent Nos.3,943,079; 4,338,228; 5,886,066; and 5,997,784.

The forming step can also comprises any of the techniques well known in the art for forming homogeneous composites into shaped articles, including injection molding and extruding, as disclosed in the aforementioned patents. Forming by extrusion is preferred.

The invention is illustrated, but not limited by, the following examples demonstrating the improved composite article that can be prepared from the composite compositions of this invention.

The following composite compositions of this invention and comparative composite compositions were prepared and composite board extruded therefrom. The composite compositions prepared and tested were as set forth in the following Table 1.

**Table 1**

| Component | Composition | | | | | | | |
|---|---|---|---|---|---|---|---|---|
| | **1** | **2** | **3** | **4** | **5** | **6** | **7** | **8** |
| Wood Maple 40 mesh | 65 | 65 | 65 | 65 | 65 | 56 | 65 | 65 |
| HDPE | 29 | 27 | 27 | 27 | 27 | 27 | 27 | 27 |
| TLPX 1229 | 6 | 6 | 6 | 6 | 6 | 6 | 6 | 6 |
| Kometra 2110FA | | 2 | | | | | | |
| Kometra 2112FA | | | 2 | | | | | |
| Kometra 8012FA | | | | 2 | | | | |
| Kometra 8112FA | | | | | 2 | | | |
| PH020-19017RRR | | | | | | 2 | | |
| 1172-189-16RRR | | | | | | | 2 | |
| Vis 465-187-14 | | | | | | | | 2 |

| | | | | | | | | |
|---|---|---|---|---|---|---|---|---|
| HDPE=high density polyethylene TLPX 1229=lubricant package of zinc stearate/ethylenebis stearamide (2:1) Kometra 2110FA, Kometra 2112FA, Kometra 8012FA and Kometra 8112FA= solid state produced maleated polypropylenes PH020-19017RRR,1172-189-16RRR and Vis 465-187-14= melt-produced maleated polypropylenes | | | | | | | | |

Compositions 2, 3, 4 and 5 are composite compositions of this invention, i.e., composite composition containing zinc stearate lubricant and solid state maleated polypropylene coupling agent. Compositions 6, 7 and 8 are similar, but comparative composite compositions, containing zinc stearate lubricant and the prior art melt-produced maleated polypropylene coupling agents. Composition 1 is a baseline comparative composite composition containing zinc stearate lubricant but no coupling agent.

The composite compositions were all formed into a boards of approximately 1" x 0.3" (2.5 cm x 0.75 cm) by known methods under the following extrusion conditions. The extruder employed was a Brabender 32 mm parallel twin screw extruder. The room conditions were 67% humidity and 69° F (20.6° C). The extruder conditions were as follows: barrel zone #1-190° C; barrel zone #2-190° C; barrel zone #3-180° C; die zone #1-170° C; die zone #2-170° C; extruder speed 40 rpm. The wood moisture content was 0.30%.

The extruder conditions, dependent, at least in part, upon the composite composition being processed, were as set forth in Table 2 for the eight composite compositions.

**Table 2**

| Process condition | Composition | | | | | | | |
|---|---|---|---|---|---|---|---|---|
| | 1 | 2 | 3 | 4 | 5 | 6 | 7 | 8 |
| Pressure before plate psi (kg/cm²) | 3400 | 3400 | 3500 | | 3600 | 3400 | 3950 | 3850 |
| | (239) | (239) | (246) | | 253) | (239) | (278) | (281) |
| Die pressure psi (kg/cm²) | 260 | 270 | 260 | | 350 | 365 | 485 | 485 |
| | (18.3) | (19) | (18.3) | | (24.6) | (25.7) | (34.1) | (34.1) |
| Extruder torque | 14 | 14 | 15 | | 16 | 17 | 19 | 19 |
| Melt temp °C | 177 | 182 | 183 | | 182 | 183 | 185 | 188 |
| Output in/min (cm/min) | 31.5 | 34 | 33.75 | 35.5 | 33.75 | 32.5 | 35.75 | |
| | (80) | (86.4) | (85.7) | (90.2) | (85.7) | (81.8) | (90.6) | |

The boards produced from the eight composite compositions had the following physical characteristic and properties. The boards produced from the composite composition containing the melt-produced maleated polypropylene coupling agents, i.e., compositions 6, 7 and 8, all had crazing and significant cracking, with the boards from composition 7 having heavy cracks, and the board from composition 8 having very heavy cracks making it impossible to measure the following listed physical properties. In contrast, the boards produced with the composite composition of this invention containing the solid state maleated polypropylene coupling agent were all good quality boards without any significant crazing or cracking. The modulus of elasticity (MOE) and modulus of rupture (MOR) for the boards extruded from composite compositions 1 to 8 were as set forth in Table 3.

**Table 3**

| Physical property | Composition | | | | | | | |
|---|---|---|---|---|---|---|---|---|
| | 1 | 2 | 3 | 4 | 5 | 6 | 7 | 8 |
| MOE | 192870 | 236100 | 283090 | 298810 | 240581 | 334320 | 466890 | - |
| MOR | 1219 | 1294 | 1572 | 1653 | 2217 | 1945 | 194- | - |

The physical properties of the composite composition with only the lubricant and no coupling agent were lowest overall. While both the melt produced maleated polypropylene coupling agents and the solid state produced maleated polypropylene coupling agents had a positive effect on these physical properties, the melt produced maleated polypropylene coupling agents has a significant adverse effect on extruder performance while the solid state produced maleated polypropylene coupling agents did not.

The invention is further illustrated by the following inventive composite compositions nos. 9 to 12 and the boards extruded therefrom. For comparison purposes a baseline composition (no. 13) without any coupling agent was also provided The compositions are as set forth in Table 4.

**Table 4**

| Component | Compositions | | | | |
|---|---|---|---|---|---|
| | **9** | **10** | **11** | **12** | **13** |
| Wood Maple 40 mesh | 65 | 65 | 65 | 65 | 69 |
| HDPE | 27 | 27 | 27 | 27 | 29 |
| TLPX 1229 | 6 | 6 | 6 | 6 | 6 |
| Kometra 2110FA | 2 | | | | |
| Kometra 2112FA | | 2 | | | |
| Kometra 8012FA | | | 2 | | |
| Kometra 8112FA | | | | 2 | |

The composite compositions were all formed into a boards of approximately 1" x 0.3" (2.5 cm x 0.75 cm) by known methods under the following extrusion conditions. The extruder employed was a Brabender 32 mm parallel twin screw extruder. The room conditions were 66% humidity and 68° F (20° C). The extruder conditions were as follows: barrel zone #1-190° C; barrel zone #2-190° C; barrel zone #3-180° C; die zone #1-170° C; die zone #2-170° C; extruder speed 40 rpm. The wood moisture content was 1.10%.

The extruder conditions, dependent, at least in part, upon the composite composition being processed, were as set forth in Table 5 for the four composite compositions.

**Table 5**

| Process condition | Composition | | | | |
|---|---|---|---|---|---|
| | 9 | 10 | 11 | 12 | 13 |
| Pressure before plate psi (kg/cm²) | 3500 | 3600 | 3500 | 3600 | 3500 |
| | (246) | (253) | (246) | (253) | (246) |
| Die pressure psi (kg/cm²) | 420 | 370 | 380 | 340 | 390 |
| | (29.6) | (26.0) | (26.7) | (23.9) | (27.4) |
| Extruder torque | 15 | 15 | 16 | 16 | 15 |
| Melt temp °C | 180 | 182 | 183 | 183 | 173 |
| Output in/min (cm/min) | 32 | 31.25 | 31.75 | 315 | 32 |
| | (81.3) | (79.4) | (80.6) | (80.0) | (81.3)) |

The boards produced from the composite compositions have the following physical characteristic and properties. The boards produced from the composite composition containing the solid state maleated polypropylene coupling agent were all good quality boards without any significant crazing or cracking. The modulus of elasticity (MOE) and modulus of rupture (MOR) for the boards extruded from composite compositions 9, 10, 11, 12 and 13 were as set forth in Table 6.

**Table 6**

| Physical property | Composition | | | | |
|---|---|---|---|---|---|
| | 9 | 10 | 11 | 12 | 13 |
| MOE | 248330 | 316190 | 317570 | 336540 | 180260 |
| MOR | 1563 | 1702 | 1820 | 1914 | 1234 |

The results again demonstrate the ability of the solid state maleated polyproplylene coupling agent to significantly improve the physical properties of the resulting composite article without adversely affecting production output or extruder performance.

The following composite compositions of this invention and comparative composite compositions were prepared and composite board extruded therefrom. The composite compositions prepared and tested were as set forth in the following Table 7.

**Table 7**

| **Component** | **Composition** | | | | | | | | |
|---|---|---|---|---|---|---|---|---|---|
| | **14** | **15** | **16** | **17** | **18** | **19** | **20** | **21** | **22** |
| Wood Maple 40 mesh | 65 | 65 | 65 | 65 | 65 | 56 | 65 | 65 | 65 |
| HDPE | 29 | 27 | 27 | 27 | 27 | 27 | 27 | 27 | 27 |
| TLPX 1229 | 6 | 6 | 6 | 6 | 6 | 6 | 6 | 6 | 6 |
| Kometra 8012FA | | 2 | | | | | | | |
| Kometra 8112FA | | | 2 | | | | | | |
| MZ-353D | | | | 2 | | | | | |
| Polybond 3150 | | | | | 2 | | | | |
| Polybond 3200 | | | | | | 2 | | | |
| MP880 | | | | | | | 2 | | |
| G-3003 | | | | | | | | 2 | |
| G-3015 | | | | | | | | | 2 |

| | | | | | | | | | |
|---|---|---|---|---|---|---|---|---|---|
| HDPE=high density polyethylene TLPX 1229=lubricant package of zinc stearate/ethylenebis stearamide (2:1) Kometra 8012FA and Kometra 8112FA= solid state produced maleated polypropylenes MD-353D, Polybond 2150, Polybond 3200, MP880, G-3003 and G-3015= melt produced maleated polypropylenes | | | | | | | | | |

Compositions 15 a nd 16 a re composite compositions of this invention, i.e., composite composition containing zinc stearate lubricant and solid state maleated polypropylene coupling agent. Compositions 17 to 22 are similar, but comparative composite compositions, containing zinc stearate lubricant and the prior art melt-produced maleated polypropylene coupling agents. Composition 14 is a baseline comparative composite composition containing zinc stearate lubricant but no coupling agent.

The composite compositions were all formed into a boards of approximately 1" x 0.3" (2.5 cm x 0.75 cm) by known methods under the following extrusion conditions. The extruder employed was a Brabender 32 mm parallel twin screw extruder. The room conditions were 67% humidity and 67° F (19.5° C). The extruder conditions were as follows: barrel zone #1-190° C; barrel zone #2-190° C; barrel zone #3-180° C; die zone #11-170° C; die zone #2-170° C; extruder speed 40 rpm. The wood moisture content was 1%.

The extruder conditions, dependent, at least in part, upon the composite composition being processed, were as set forth in Table 8 for the nine composite compositions.

**Table 8**

| Process condition | **Composition** | | | | | | | | |
|---|---|---|---|---|---|---|---|---|---|
| | 14 | 15 | 16 | 17 | 18 | 19 | 20 | 21 | 22 |
| Extruder Pressure psi (kg/cm²) | 3400 | 3600 | 3700 | 3500 | 3700 | 3600 | 3700 | 3625 | 3800 |
| | (239) | (253) | (260) | (246) | (260) | (253) | (260) | (255) | (267) |
| Die pressure psi (kg/cm²) | 295 | 590 | 400 | 395 | 455 | 497 | 440 | 445 | 450 |
| | (20.7) | (41.5) | (28.1) | (27.7) | (32) | (34.9) | (29.5) | (31.3) | (31.7) |
| Extruder torque (Amps) | 14 | 16 | 16 | 19 | 17 | 18 | 16 | 18 | 19 |
| Melt temp °C | 173 | 179 | 183 | 179 | 180 | 183 | 183 | 182 | 182 |
| Output in/min (cm/min) | 33.25 | 34.8 | 34.3 | 33.12 | 35.1 | 35.5 | 34.8 | 35.3 | 35 |
| | (84.5) | (88.4) | (87.1) | (84.1) | (89.2) | (90.2) | (88.4) | (89.7) | (88.9) |

The boards produced from the nine composite compositions had the following physical characteristic and properties. The boards produced from the composite composition containing the melt-produced maleated polypropylene coupling agents, i.e., compositions 17 to 22, all had crazing and significant cracking, with the boards from compositions 19 and 22 having heavy cracks. In contrast, the boards produced with the composite composition of this invention (Compositions 15 and 16) containing the solid state maleated polypropylene coupling agent were all good quality boards without any significant crazing or cracking. The modulus of elasticity (MOE) and modulus of rupture (MOR) for the boards extruded from composite compositions 14 to 22 were as set forth in Tables 9A and 9B.

**Table 9A**

| Physical properly | Composition | | | | |
|---|---|---|---|---|---|
| | 14 | 15 | 16 | 17 | 18 |
| MOE | 172780 | 3188700 | 344680 | 320480 | 319670 |
| MOR | 1184 | 1864 | 1854 | 1609 | 1749 |

**Table 9B**

| Physical property | Composition | | | |
|---|---|---|---|---|
| | 19 | 20 | 21 | 22 |
| MOE | 298850 | 338210 | 270170 | 310900 |
| MOR | 1596 | 1750 | 1451 | 1705 |

The physical properties of the composite composition with only the lubricant and no coupling agent were lowest overall. While both the melt produced maleated polypropylene coupling agents and the solid state produced maleated polypropylene coupling agents had a positive effect on these physical properties, the melt produced maleated polypropylene coupling agents has a significant adverse effect on extruder performance while the solid state produced maleated polypropylene coupling agents did not.

The results again demonstrate the ability of the solid state maleated polyproplylene coupling agent to significantly improve the physical properties of the resulting composite article without adversely affecting production output or extruder performance.

While the invention has been described herein with reference to the specific embodiments thereof, it will be appreciated that changes, modification and variations can be made without departing from the spirit and scope of the inventive concept disclosed herein. Accordingly, it is intended to embrace all such changes, modification and variations that fall with the spirit and scope of the appended claims.

## Claims

1. A composition for forming shaped composite articles comprising:
cellulosic fiber;
thermoplastic polyolefin binder;
a coupling agent comprising solid state maleated polypropylene; and
a stearate lubricant.

2. The composition of claim 1 wherein said solid state maleated polypropylene coupling agent has from 1.3 to 1.6% maleic anhydride functionalities, on average, per polymer chain.

3. The composition of claim 1 wherein said stearate lubricant additionally comprises ethylenebis stearamide.

4. The composition of claim 1 wherein the thermoplastic polyolefin binder is polyethylene.

5. The composition of claim 1 wherein the cellulosic fiber comprises 50 to 84 parts by weight, the thermoplastic polyolefin binder comprises from 10 to 50 parts by weight, the solid state maleated coupling agent comprises from 1 to 5% by weight of the composition, and the stearate lubricant comprises from 1 to 10 percent by weight of the composition.

6. A method of manufacturing an article comprising:
providing a composition for forming shaped articles, the composition comprising: cellulosic fiber; thermoplastic polyolefin binder; solid state maleated polypropylene coupling agent, and a stearate lubricant; and
forming said composition into a shaped article.

7. A method according to claim 6 wherein the forming of the article is by extrusion.

8. An additive package for use in forming a composite composition for forming an article from said composite composition, the additive package comprising:
coupling agent comprising solid state maleated polypropylene coupling agent, and
lubricant comprising a stearate lubricant, and
wherein the ratio of stearate lubricant to coupling agent is from 1:1 to 4:1.

## Patentansprüche

1. Zusammensetzung zum Bilden von geformten Verbundartikeln, umfassend:
Cellulosefaser;
thermoplastisches Polyolefin-Bindemittel;
ein Kupplungsmittel bzw. Haftvermittler, umfassend im festen Zustand maleatiertes Polypropylen; und
ein Stearat-Gleitmittel.

2. Zusammensetzung von Anspruch 1, wobei das Kupplungsmittel aus im festen Zustand maleatiertem Polypropylen im Durchschnitt von 1,3 bis 1,6 % Maleinäureanhydrid-Funktionalitäten pro Polymerkette aufweist.

3. Zusammensetzung von Anspruch 1, wobei das Stearat-Gleitmittel zusätzlich Ethylen-bis-stearamid umfasst.

4. Zusammensetzung von Anspruch 1, wobei das thermo-plastische Polyolefin-Bindemittel Polyethylen ist.

5. Zusammensetzung von Anspruch 1, wobei die Cellulosefaser 50 bis 84 Gewichtsteile ausmacht, das thermo-plastische Polyolefin-Bindemittel 10 bis 50 Gewichtsteile ausmacht, das im festen Zustand maleatierte Kupplungsmittel 1 bis 5 Gew.-% bezüglich der Zusammensetzung ausmacht und das Stearat-Gleitmittel 1 bis 10 Prozent, bezogen auf das Gewicht der Zusammensetzung, ausmacht.

6. Verfahren zur Herstellung eines Artikels, umfassend:
das Bereitstellen einer Zusammensetzung zum Bilden von geformten Artikeln, wobei die Zusammensetzung folgendes umfasst: Cellulosefaser; thermoplastisches Polyolefin-Bindemittel; ein Kupplungsmittel aus im festen Zustand maleatiertem Polypropylen; und ein Stearat-Gleitmittel; und
das Bilden der Zusammensetzung zu einem geformten Artikel.

7. Verfahren gemäß Anspruch 6, wobei das Bilden des Artikels durch Extrusion erfolgt.

8. Additiv-Packung zur Verwendung bei dem Bilden einer Verbundzusammensetzung für das Bilden eines Artikels aus der Verbundzusammensetzung, wobei die Additiv-Packung folgendes umfasst:
Kupplungmittel, umfassend ein Kupplungsmittel aus im festen Zustand maleatiertem Polypropylen, und
Gleitmittel, umfassend ein Stearat-Gleitmittel, und
wobei das Verhältnis von Stearat-Gleitmittel zum Kupplungsmittel zwischen 1 : 1 und 4 : 1 liegt.

## Revendications

1. Composition pour la formation d'articles composites formés qui comprennent :
une fibre cellulosique ;
un liant de polyoléfine thermoplastique ;
un agent de couplage comprenant du polypropylène à l'état solide modifié par maléate ; et
un lubrifiant à base de stéarate.

2. Composition selon la revendication 1, dans laquelle ledit agent de couplage à base de polypropylène à l'état solide modifié par maléate possède de 1,3 à 1,6 % de fonctionnalités d'anhydride maléique, en moyenne, par chaîne de polymère.

3. Composition selon la revendication 1, dans laquelle le lubrifiant à base de stéarate comprend en outre de l'éthylène bis stéaramide.

4. Composition selon la revendication 1, dans laquelle le liant thermoplastique est du polyéthylène.

5. Composition selon la revendication 1, dans laquelle la fibre cellulosique constitue de 50 à 84 parties en poids, le liant de polyoléfine thermoplastique constitue de 10 à 50 parties en poids, l'agent de couplage à l'état solide modifié par maléate constitue de 1 à 5 % en poids de la composition, et le lubrifiant à base de stéarate constitue de 1 à 10 % en poids de la composition.

6. Procédé de fabrication d'un article comprenant :
la fourniture d'une composition pour la formation d'articles formés, la composition comprenant : une fibre cellulosique ; un liant de polyoléfine thermoplastique ; un agent de couplage à l'état solide modifié par maléate et un lubrifiant à base de stéarate ; et
la formation de ladite composition en un article formé.

7. Procédé selon la revendication 6, dans lequel la formation de l'article se fait par extrusion.

8. Ensemble d'additifs pour utilisation dans la formation d'une composition composite pour la formation d'un article à partir de ladite composition composite, l'ensemble d'additifs comprenant :
un agent de couplage constitué d'un agent de couplage de polypropylène à l'état solide modifié par maléate, et
un lubrifiant constitué d'un lubrifiant à base de stéarate et
dans lequel le rapport du lubrifiant à base de stéarate à l'agent de couplage varie de 1:1 à 4:1.
